# EUROPÄISCHE PATENTSCHRIFT

(11) **EP 1 862 406 B1**
(45) Veröffentlichungstag und Bekanntmachung des Hinweises auf die Patenterteilung: **30.12.2009**
(21) Anmeldenummer: 07108467.7
(22) Anmeldetag: 18.05.2007
(51) Int. Cl.: B65G 1/137

(54) **Zwischenlagervorrichtung mit Aufnahmeplätzen**
Buffer Storage Device with Storage Places
Dispositif de Stockage Intermédiaire Doté de Logements

(30) Priorität: 02.06.2006 DE 102006025934
(43) Veröffentlichungstag der Anmeldung: 05.12.2007
(73) Patentinhaber: Dematic GmbH, 63073 Offenbach am Main (DE)
(72) Erfinder: Jungbluth, Volker, 64850, Schaafheim (DE); Nowicki, Marcos Rodriguez, 63110, Rodgau (DE); Stehr, Peter, 63179, Obertshausen (DE)
(74) Vertreter: Moser, Jörg Michael

(56) Entgegenhaltungen:
- EP-A- 1 522 507
- WO-A-99/11558
- WO-A-99/37562
- DE-U1- 20 311 674
- JP-A- 63 267 604
- US-A- 3 908 800
- US-A1- 2003 155 731

## Beschreibung

Die Erfindung betrifft eine Zwischenlagervorrichtung mit einer Kommisionierhilfe und einem Lagerteil mit Aufnahmeplätzen für die von einem Kommissionierer während des Kommissioniervorgangs eingesammelten Artikel.

Kommissioniersysteme, die nach dem Prinzip "Mann zur Ware" arbeiten, sind allgemein bekannt. Hierbei bewegt sich ein Kommissionierer gezielt durch einen Lagerbereich, sammelt Stückgüter beziehungsweise Waren - nachfolgend als Artikel bezeichnet - manuell ein und stellt diese zu einem Auftrag zusammen. Während des Kommissioniervorgangs lagert der Kommissionierer die bereits gesammelten Artikel in einem Sammelmittel zwischen, das auf einem Aufnahmeplatz einer Zwischenlagervorrichtung abgestellt ist. In üblicher Weise ist diese Zwischenlagervorrichtung als Wagen mit einer oder mehreren regalartig angeordneten Aufnahmeflächen ausgebildet. Die Aufnahmeflächen dienen als Aufnahmeplätze für die nebeneinander und/oder hintereinander abgestellten Sammelmittel. Der Wagen kann von Hand geschoben oder auch angetrieben sein. Die Sammelmittel können als Behälter, Kartons, Wannen oder Paletten ausgebildet sein.

Zu Beginn des Kommissioniervorganges werden geeignete leere Sammelmittel in die Aufnahmeplätze der Sammelvorrichtung gestellt. Die Wegezeit pro Artikel stellt die entscheidende Größe für die Effektivität des Kommissioniersystems dar. Für eine Erhöhung der Effektivität werden mehrere Kommissionieraufträge zu einem Serienauftrag zusammengefasst, die parallel von einem Kommissionierer bearbeitet werden. Hierdurch wird eine höhere Pickdichte während eines Weges des Kommissionierers erreicht. Bei dieser parallelen Kommissionierung führt der Kommissionierer eine der Anzahl der Kommissionieraufträge entsprechende Anzahl von Sammelmitteln in der Zwischenlagervorrichtung mit. Der Kommissionierer kann hierbei zu Fuß oder mit einer Fahrhilfe den für den Kommissioniervorgang erforderlichen Weg zurücklegen. Am Ende des Kommissioniervorganges wird die Zwischenlagervorrichtung von dem Kommissionierer manuell entleert, d. h. die mit den gesammelten Artikeln befüllten Sammelmittel werden entnommen und an einen weiteren Förderer für den Weitertransport übergeben.

Außerdem ist von der Firma Kiva Systems (siehe www.kivasystems.com und WO 2004/069699A2) ein Kommissioniersystem nach dem Prinzip "Ware zum Mann" bekannt. Dieses Kommissioniersystem besteht im Wesentlichen aus fahrerlosen Flurförderfahrzeugen, von denen in einem Lagerbereich abgestellte Regale mit zu kommissionierenden Artikeln zu einer Kommissionierzone gefördert werden und nach erfolgter Kommissionierung zurück in den Lagerbereich. Die Regale sind in üblicher Weise mit mehreren übereinander angeordneten Fachböden für die zu kommissionierenden Artikel ausgebildet und werden für den Fördervorgang von dem fahrerlosen Flurförderfahrzeug vollständig unterfahren, leicht angehoben und dann transportiert.

Des Weiteren ist von der Firma psb GmbH Materialfluss + Logistik auf deren Homepage unter www.psb-gmbh.de ein Prospekt mit dem Titel "Materialfluss und Logistik - Erfolgreich anders" veröffentlicht. In diesem Prospekt ist auf Seite 18 ein mehrzoniges Kommissioniersystem dargestellt, das Zwischenlagervorrichtungen in Form von Regalen verwendet, die über Rollenbahnen den einzelnen Kommissionierzonen zugeführt werden. Innerhalb dieser Kommissionierzonen hat der Kommissionierer nur kurze Wege für die einzelnen Kommissioniervorgänge zurück zu legen. Auch diese Regale weisen in üblicher Weise mehrere übereinander angeordnete Fachböden auf. Im Bereich der einzelnen Kommissionierzonen und an die jeweilige Rollenbahn angrenzend ist zumindest eine rahmenförmige Kommissionierhilfe angeordnet, hinter der die Zwischenlagervorrichtung für den Kommissioniervorgang angehalten worden, so dass der Kommissioniervorgang durch den Rahmen der Kommissionierhilfe hindurch in die Zwischenlagervorrichtung erfolgt. Die Kommissionierhilfe hat die Aufgabe, den Kommissionierer mit den erforderlichen Informationen für den Kommissioniervorgang zu versorgen.

Aus der DE 203 11 674 U1 ist ein handgeschobener Kommissionierwagen mit mindestens zwei vertikal versetzten Ablageflächern bekannt, wobei die Ablagefächer an dem Kommissionierwagen in im Wesentlichen horizontaler Richtung verschiebbar gelagert sind.

Aus der US 3,908,800 ist ein Kommissioniersystem zum manuellen Kommissionieren bekannt, das ein Verarbeitungsmittel zum Auslesen eines Auftrages umfasst, in dem Warenanzahl und Identität enthalten ist, und das daraufhin diese in eine Sequenz innerhalb des Lagers anordnet. Das System umfasst ferner eine Speichereinheit, um die Daten abzuspeichern und bereitzustellen, sowie ein Anzeigemittel, das mit der Speichereinheit gekoppelt ist, um die auszuwählende Anzahl von Gegenständen und deren Anordnung darzustellen. Des Weiteren umfasst das System einen Kommissionierwagen, mit einer Anzahl von Fächern, die mindestens der Anzahl der auszuwählenden Gegenstände des Auftrags entspricht, und bei dem die Anzeigen die Anzahl der auszuwählenden Gegenstände pro Fach aufzeigen. Des Weiteren ist die Ausgabe der Speichereinheit mit den Anzeigen des Handwagens verbunden.

Aus der US 2003/0155731 A1 ist ein Handwagen zur Verwendung in einem Lebensmittelladen bekannt, der einen Körper und mindestens eine Öffnung für das Lagern von Behältern und eine Batteriespeicherabteilung aufweist, um eine Batterie zu speichern, wobei der Körper auf Rädern gestützt ist und ein sich nach oben von dem Körper erstreckender Stützrahmen vorgesehen ist zur Aufnahme einer Vielzahl von Tütenhaltern. Des Weiteren umfasst der Wagen mindestens einen Handgriff zum Bewegen des Wagens sowie eine Computereinrichtung zum Tragen eines Computers und eines Monitors, wobei die Lebensmittel nach dem Scannen in die von den Beutelhaltern getragenen Beuteln eingelegt werden und die Beutel anschließend in die Behälter eingelegt werden.

Die WO 99/37562 A1 offenbart eine Vorrichtung zum Einsammeln bzw. Einlagern von Objekten in einem Lager, wobei die Vorrichtung ein Gerät umfasst, das in der Lage ist anzuzeigen, wie viel Objekte eingesammelt bzw. eingelagert werden sollen an einem bestimmten Ort innerhalb des Lagers und diese Daten in eine anzeigbare oder hörbare Information konvertiert. Das Gerät wird an einer Schiene befestigt, über die es auch mittels Stromabnehmern mit Strom versorgbar ist. Über die Stromversorgung kann auch die Datenversorgung des Gerätes stattfinden.

Aus der WO 99/11558 A1 ist ein Personen tragendes Fahrzeug bekannt, das einen selbst angetriebenen steuerbaren Körper umfasst, an dem ein sich nach oben erstreckender Mast befestigt ist, wobei eine Fahrerkabine an dem Mast befestigt ist und an dem Körper eine Ladepritsche befestigt ist, zum Tragen von Artikeln, die von dem Fahrzeug transportiert werden sollen. Des Weiteren ist an dem Mast ein abnehmbar befestigbares Tablett vorgesehen.

Aus der JP 63-267604 A ist ein angetriebener Kommissionierwagen bekannt, in dem sowohl der Kommissionierer als auch Fächer für die Aufnahme der zu kommissionierenden Waren Platz finden. Dabei sind an den Fächern Anzeigen zur Anzeige des zu kommissionierenden Faches vorgesehen.

Aus der EP 1 522 507 A1 ist ein Verfahren zum Kommissionieren bekannt, bei dem in einem Regallager unterschiedliche Produkte gelagert werden, die jeweils von einem Kommissionierer eingesammelt werden, wobei dem Kommissionierer einzigartige Identifizierungsmuster zur Anzeige einer Regalposition angezeigt werden, die mit einer Auftragsposition übereinstimmen, der Kommissionierer an der Regalposition visuell ein Verifikationsidentifikationsmuster überprüft, das mit der Regalstelle assoziiert ist, und er daraufhin dieses Verifikationsidentifikationsmuster auf einer Anzeige auswählt aus einer Serie von entsprechenden Verifikationsidentifikationsmustern, wodurch ein Kontrollsystem in die Lage versetzt wird, die jeweilige Auswahl zu überprüfen.

Ausgehend von diesem Stand der Technik liegt der Erfindung die Aufgabe zu Grunde, eine Zwischenlagervorrichtung mit Aufnahmeplätzen zu schaffen, mit dem eine Optimierung der Wegezeit pro Artikel erreicht wird und bei der die Zahl der Anzeigen reduziert ist.

Diese Aufgabe wird durch eine Zwischenlagervorrichtung mit Aufnahmeplätzen mit den Merkmalen des Anspruchs 1 gelöst.

Erfindungsgemäß wird bei einer in Bezug auf die Zwischenlagervorrichtung mit Aufnahmeplätzen für die von einem Kommissionierer während des Kommissioniervorgangs eingesammelten Artikel eine Optimierung der Wegezeit pro Artikel dadurch erreicht, dass die Aufnahmeplätze fachartig ausgebildet sind und in Richtung eines diese befüllenden Kommissionierers offen sind. Der Kommissionierer kann die gesammelten Artikel somit einfach in den zugehörigen Aufnahmeplatz ablegen, da deren fachartige Ausbildung eine Aufrechterhaltung der den einzelnen Kommissionieraufträgen zugeordneten Artikel gewährleistet.

Besonders vorteilhaft ist vorgesehen, dass die Aufnahmeplätze nach vorne in Richtung eines diese befüllenden Kommissionierers offen sind.

Dabei ist die Zwischenlagervorrichtung mit einer Kommissionierhilfe lösbar verbindbar. Durch diese Trennung der Zwischenlagervorrichtung von der Kommissionierhilfe kann eine Kommissionierhilfe für verschiedene Zwischenlagervorrichtungen verwendet werden und die Zwischenlagervorrichtungen können entsprechend einfacher ausgestaltet werden. Auch kann die Zwischenlagervorrichtungen einfacher zur Zwischenlagerung oder den Weitertransport der gesammelten Artikel verwendet werden, wenn die Kommissionierhilfe zuvor entfernt wurde. Außerdem kann die Kommissionierhilfe dann bereits in einem weiteren Kommissioniervorgang eingesetzt werden.

Die Kommissionierhilfe weist Anzeigen zur Erleichterung des Kommissioniervorganges auf, von denen jede im miteinander verbundenen Zustand der Zwischenlagervorrichtung mit einer Kommissionierhilfe jeweils einem der Aufnahmeplätze der Zwischenlagervorrichtung zugeordnet ist.

Konstruktiv besonders einfach ist, dass die Kommissionierhilfe als Rahmen mit vertikalen Längsträgern und horizontalen Querträgern ausgebildet ist und die Anzeigen an den Querträgern angeordnet sind.

Neben der möglichen Trennbarkeit der Kommissionierhilfe von der Zwischenlagervorrichtung bietet, die Aufteilung der Zwischenlagervorrichtung in ein Lagerteil mit den Aufnahmeplätzen und ein Fahrteil vergleichbare Vorteile. Das regalartige Lagerteil, das Weitertransport- und Zwischenlagerungsaufgaben übernehmen kann, bleibt weiterhin konstruktiv sehr einfach ausgestaltet.

Mit dem Ziel vor Augen, dass Lagerteil als einfaches Bauteil auszubilden, ist weiterhin vorgesehen, dass die Kommissionierhilfe auf dem Fahrteil der Zwischenlagervorrichtung befestigt ist.

Nachfolgend wird die Erfindung an Hand eines in einer Zeichnung dargestellten Ausführungsbeispiels näher erläutert. Es zeigen:
Figur 1 eine schematische Ansicht einer Zwischenlagervorrichtung für die Kommissionierung von Artikel,
Figur 2 eine Ansicht der Zwischenlagervorrichtung nach Figur 1 getrennt in ein Lagerteil und ein Fahrteil und
Figur 3 eine Ansicht von Lagerteilen von Zwischenlagervorrichtungen auf einem Förderer im Bereich einer Arbeitsstation.

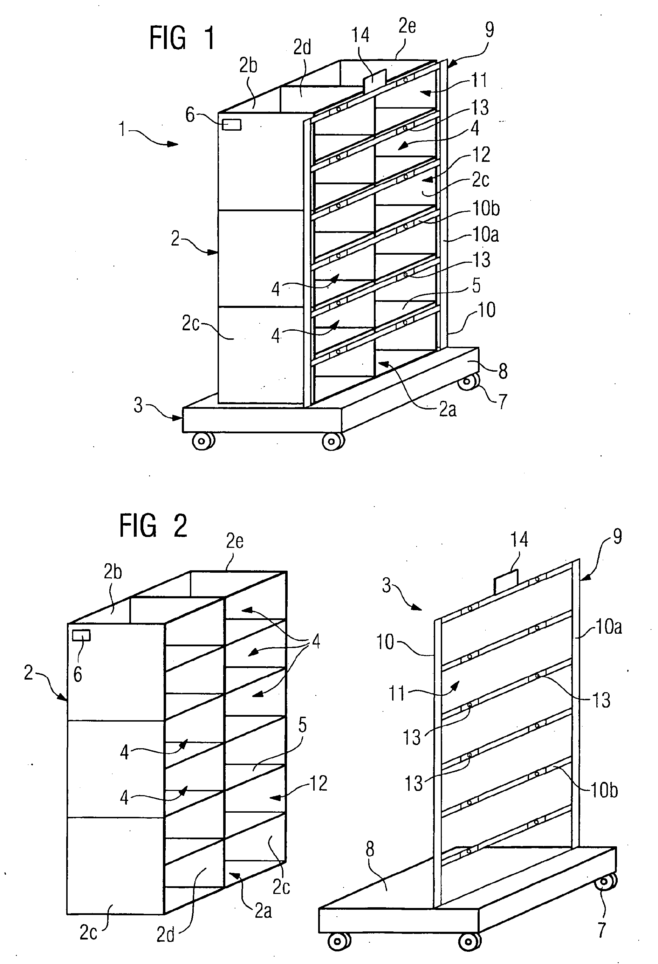

Die Figur 1 zeigt eine schematische Ansicht einer Zwischenlagervorrichtung 1 für die Kommissionierung von Artikel nach dem Prinzip "Mann zur Ware". Hierbei wird die Zwischenlagervorrichtung 1 von dem Kommissionierer von Hand in den Lagerbereich mit den zu kommissionierenden Artikeln geschoben und dort werden parallel für mehrere Aufträge die entsprechenden Artikel eingesammelt.

Die Zwischenlagervorrichtung 1 besteht im Wesentlichen aus einem regalartigen Lagerteil 2 und einen wagenartigen Fahrteil 3. Das Lagerteil 2 ist schrankförmig und weist entsprechend eine offene Vorderseite 2a, eine Rückwand 2b, eine rechte und eine linke Seitenwand 2c, einen Boden und eine Oberseite 2e auf. Zu der Oberseite 2e und der Vorderseite 2a ist das Lagerteil 2 offen. Des Weiteren weist das Lagerteil 2 mehrere Aufnahmeplätze 4 auf, die rasterartig in zwei Spalten nebeneinander und sechs Zeilen übereinander angeordnet sind. Die Zwischenlagervorrichtung 2 hat somit insgesamt zwölf Aufnahmeplätze 4. Jeder Aufnahmeplatz 4 hat eine Aufnahmefläche 5, die den Boden des Aufnahmeplatzes 4 bildet, eine Seitenwand 2c, eine Trennwand 2d und eine Rückwand 2b. Somit ist jeder Aufnahmeplatz 4 nur zur Vorderseite 2a offen unter Ausnahme der Aufnahmeplätze 4 der obersten Zeile, die auch nach oben offen sind. Außerdem sind die Aufnahmeplätze 4 einer Zeile durch die Trennwände 2d voneinander getrennt.

In die Aufnahmeplätze 4 werden von dem Kommissionierer die gesammelten Artikel direkt ohne die Verwendung von Sammelmitteln wie Behälter, Kartons, Wannen oder Paletten abgelegt oder am Ende des Kommissioniervorgangs entnommen. Auf eine Verwendung von Sammelmitteln wird verzichtet, was insbesondere bei kleinvolumigen Artikel von Vorteil ist, da die Sammelmittel dann häufig um ein Vielfaches größer sind als die zu kommissionierenden Artikel. Die Anzahl der parallel abarbeitbaren Kommissionieraufträge kann somit erhöht werden. Außerdem brauchen keine Einrichtungen für die Handhabung der leeren Kommissioniersammelmittel vorgesehen werden.

Hierfür weist die Zwischenlagervorrichtung 2 die voneinander durch Trennwände 2d getrennten Aufnahmeplätze 4 auf, um die Trennung der einzelnen parallel kommissionierten Artikel beizubehalten.

Grundsätzlich können aber die zuvor beschriebenen Zwischenlagervorrichtungen 2 auch mit Sammelmitteln verwendet werden.

Außerdem ist an einer der beiden Seitenwand 2c des Lagerteils 2 ein Kennzeichen 6, insbesondere in Form einer eindeutigen Zahl, angeordnet, um die Lagerteile 2 voneinander unterscheiden zu können. Das Kennzeichen 6 ist vorzugsweise ein maschinenlesbarer Code.

Das Lagerteil 2 ist ein reines Metallbauteil und weist keine elektrischen Anschlüsse oder Verbraucher auf; noch sind an dem Lagerteil 2 Kommissionierhilfen befestigt. Insgesamt ist das Lagerteil 2 somit sehr einfach aufgebaut und kann kostengünstig in großen Stückzahlen hergestellt werden.

Außerdem kann das Lagerteil 2 durch seine schrankartige Gestalt einfach von verschiedenen Förderern wie Stetigförderern, Einschienenhängebahnen, Regalbediengeräten, Flurförderzeugen, fahrerlosen Transportsystemen transportiert werden. Je nach Art des verwendeten Förderers kann die Aufnahme und/oder Abgabe des Lagerteils 2 von dem Fahrteil 3 ohne entsprechende Personalbindung automatisch erfolgen. Der Kommissionierer kann dann bereits mit dem Fahrteil 3 ein weiteres Lagerteil 2 für den nächsten Kommissionierauftrag übernehmen. Mit diesen Förderern kann dann auch einfach bei mehrzonigen Kommissioniersystemen, das Lagerteil 2 zwischen den einzelnen Kommissionierteilbereichen weitergereicht werden.

Das Fahrteil 3 besteht im Wesentlichen aus vier Rollen 7 und einer Grundplatte 8. Von der Grundplatte 8 wird das Lagerteil 2 aufgenommen und dort befestigt. In dem befestigten Zustand ist dann das Lagerteil 2 von Hand oder angetrieben für den Kommissioniervorgang durch den Kommissionierer durch die Gänge des Lagers des Kommissionierbereichs verfahrbar.

Des Weiteren weist die Zwischenlagervorrichtung 2 eine Kommissionierhilfe 9 auf, die im Wesentlichen aus einem gitterartigen Rahmen 10 besteht. Der Rahmen 10 ist aus zwei parallelen und voneinander beabstandeten sowie vertikal ausgerichteten Längsträgern 10a gebildet, die über sechs parallele und voneinander beabstandete sowie horizontal ausgerichtete Querträger 10b miteinander verbunden sind. Die Abstände zwischen den Längsträgern 10a und den Querträgern 10b sind so gewählt worden, dass die hiervon begrenzten Öffnungen 11 in Bezug auf Ihre Größe und Ausrichtung im Wesentlichen mit den Öffnungen 12 der Aufnahmeplätze 4 übereinstimmen, wenn eine Zwischenlagervorrichtung 2 hinter eine Kommissionierhilfe 9 gestellt wird. Der Be- und/oder Entladevorgang in bzw. aus den Aufnahmeplätzen 5 des Lagerteils 2 erfolgt somit durch die Öffnungen 11 des Rahmens 10 der Kommissionierhilfe 9 hindurch.

Mittels der Kommissionierhilfe 9 wird dem Kommissionierer die Ausführung der Kommissionieraufgabe erleichtert, da an den Querträger 10b und somit über den Aufnahmeplätzen 4 in bekannter Weise jeweils Anzeigen 13 angeordnet sind, die dem Kommissionierer während des Kommissioniervorgangs den Aufnahmeplatz 4 für die Ablage der gesammelten Artikel anzeigt. Da die Anzeigen 13 nicht an allen Lagerteilen 2 vorgesehen sind sondern nur an den Rahmen 10 der Kommissionierhilfe 9, kann die benötigte Anzahl stark reduziert werden.

Zusätzlich ist an dem Rahmen 10 der Kommissionierhilfe 9 ein Display 14 angeordnet, dem der Kommissionierer weitere Angaben zu der zu bearbeitenden Kommissionieraufgabe entnehmen kann. Dieses Display 14 kann mit einem nicht dargestellten Terminal verbunden sein, der für eine vorzugsweise drahtlose Datenübertragung mit einem Lagerverwaltungsrechner ausgerüstet ist.

Die Figur 2 zeigt eine Ansicht der Zwischenlagervorrichtung 1 nach Figur 1, das in sein Lagerteil 2 und sein Fahrteil 3 getrennt ist. Dieser Figur 2 ist besonders klar zu entnehmen, dass die Kommissionierhilfe 9 mit dem Rahmen 10 Bestandteil des Fahrteils 3 der Zwischenlagervorrichtung 1 ist. Der Rahmen 10 ist mit den unteren Enden seiner Längsträger 10a auf der Oberseite der Grundplatte 8 befestigt. Zwischen den unteren Enden der Längsträger 10a braucht daher kein Querträger 10b vorgesehen sein. Außerdem ist der Rahmen 10 in Längsrichtung der Grundplatte 8 gesehen zu einem seitlichen Rand der Grundplatte 8 versetzt angeordnet, um ausreichend Platz auf der Grundplatte 8 für die Aufnahme des Lagerteils 2 zu belassen.

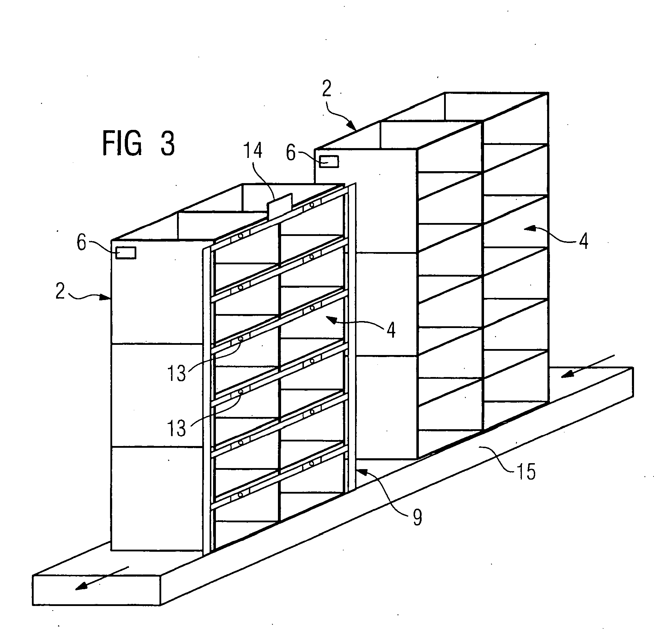

In der Figur 3 ist eine Ansicht von Lagerteilen 2 von Zwischenlagervorrichtungen 1 auf einem Förderer 15 im Bereich einer Arbeitsstation gezeigt. An Hand dieser Figur wird deutlich, dass durch die Trennung der Zwischenlagervorrichtungen 1 in ein Lagerteil 2 und ein Fahrteil 3, das Lagerteil 2 auch außerhalb des eigentlichen Pick-Vorganges durch den Kommissionierer in weiteren Phasen des Kommissioniervorganges Verwendung findet, ohne das Fahrteil 3 zu belegen. Nach erfolgtem Kommissioniervorgang können die Lagerteile 2, die mit kommissionierten Artikeln gefüllt sind, einfach zur Zwischenlagerung dienen. Hierfür werden Lagerteile 2 entweder auf dem Flurboden oder einem Förderer 15 abgestellt. Dieser Förderer 15 kann auch mit einem Funktionsbereich verbunden sein, der eine weitere stationäre Kommissionierhilfe 9 aufweist, um eine manuelle Entleerung des Lagerteiles 2 zu erleichtern. Hierbei wird das Lagerteil 2 auf dem Förderer 15 der Kommissionierhilfe 9, insbesondere deren Rückseite, zugeführt und nach erfolgter Leerung der Artikel durch den Rahmen 10 der Kommissionierhilfe 9 hindurch weitertransportiert. Auch kann eine automatische Entleerung der Lagerteile 2 vorgesehen sein, wobei die Kommissionierhilfe 9 dann entfallen kann.

## Patentansprüche

1. Zwischenlagervorrichtung (1) mit einer Kommissionierhilfe (9) und einem Lagerteil (2) mit Aufnahmeplätzen (4) und mit einem Fahrteil (3), wobei das Lagerteil (2) von dem Fahrteil (3) trennbar ist und die Kommissionierhilfe (9) auf dem Fahrteil (3) befestigt ist, **dadurch gekennzeichnet, dass** die Kommissionierhilfe (9) als Rahmen (10) mit vertikalen Längsträgern (10a) und horizontalen Querträgern (10b) ausgebildet ist und Anzeigen (13) an den Querträgern (10b, 10a) angeordnet sind, so dass die Anzeigen (13) dem Kommissionierer während des Kommissioniervorgangs die jeweiligen Aufnahmeplätze (4) für die Ablage anzeigen, dass die Aufnahmeplätze (4) fachartig ausgebildet sind und in Richtung eines diese befüllenden Kommissionierers offen sind, und dass die Anzeigen (13) der Kommissionierhilfe (9) im verbundenen Zustand des Lagerteils mit der Kommissionierhilfe (9) jeweils einem der Aufnahmeplätze (4) der Zwischenlagervorrichtung (1) zugeordnet sind.

2. Zwischenlagervorrichtung nach Anspruch 1, **dadurch gekennzeichnet, dass** die Aufnahmeplätze (4) nach vorne in Richtung eines diese befüllenden Kommissionierers offen sind.

## Claims

1. Buffer storage device (1) having an order-picking aid (9) and a storage portion (2) which has receiving locations (4) and having a portion for travel (3), the storage portion (2) being able to be separated from the portion for travel (3) and the order-picking aid (9) being fastened in place on the portion for travel (3), **characterized in that** the order-picking aid (9) takes the form of a frame (10) having vertical longitudinal struts (10a) and horizontal cross-struts (10b), and indicators (13) are arranged on the cross-struts (10b, 10a), the indicators (13) thus indicating the respective receiving locations (4) for the deposit of items to the order picker during the order-picking process, **in that** the receiving locations (4) are of pigeon-hole form and are open towards an order picker who fills them, and **in that**, when the storage portion is in the connected state to the order-picking aid (9), the indicators (13) of the order-picking aid (9) are associated with respective ones of the receiving locations (4) of the buffer storage device (1).

2. Buffer storage device according to claim 1, **characterized in that** the receiving locations (4) are open in the forward direction towards an order picker who fills them.

## Revendications

1. Dispositif de stockage intermédiaire (1) comportant une aide à la préparation de commandes (9) et une partie de stockage (2) dotée d'emplacements de réception (4) et d'une partie de roulement (3), la partie de stockage (2) pouvant être séparée de la partie de roulement (3) et l'aide à la préparation de commandes (9) étant fixée sur la partie de roulement (3), **caractérisé en ce que** l'aide à la préparation de commandes (9) est conformée en cadre (10) doté de montants verticaux (10a) et de traverses horizontales (10b) et des indications (13) sont disposées sur les traverses (10b, 10a) de sorte que, pendant le processus de préparation de commandes, les indications (13) indiquent au préparateur de commandes les emplacements de réception respectifs (4) pour le rangement, **en ce que** les emplacements de réception (4) sont conformés en compartiments et sont ouverts en direction d'un préparateur de commandes qui les remplit, et **en ce que**, lorsque la partie de stockage est raccordée à l'aide à la préparation de commandes (9), les indications (13) de l'aide à la préparation de commandes (9) sont respectivement associées à l'un des emplacements de réception (4) du dispositif de stockage intermédiaire (1).

2. Dispositif de stockage intermédiaire selon la revendication 1, **caractérisé en ce que** les emplacements de réception (4) sont ouverts vers l'avant en direction d'un préparateur de commandes qui les remplit.
